(19) Europäisches Patentamt
European Patent Office
Office européen des brevets

(11) **EP 2 560 458 A1**

(12) **EUROPÄISCHE PATENTANMELDUNG**

(43) Veröffentlichungstag:
**20.02.2013 Patentblatt 2013/08**

(51) Int Cl.:
***H05B 1/02*** *(2006.01)*

(21) Anmeldenummer: 11290377.8

(22) Anmeldetag: **19.08.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Behr France Rouffach SAS
68250 Rouffach (FR)**

(72) Erfinder: **Herrbach, Stephane
67220 Triembach au-Val (DE)**

(74) Vertreter: **Grauel, Andreas et al
Grauel IP
Patentanwaltskanzlei
Presselstrasse 10
70191 Stuttgart (DE)**

(54) **Verfahren zum Prüfen eines Steuergeräts für mindestens ein PTC-Heizelement oder eines PTC-Heizers für ein Fahrzeug und Steuergerät für mindestens ein PTC-Heizelement eines PTC-Heizers für ein Fahrzeug**

(57)   Die vorliegende Erfindung betrifft ein Verfahren zum Prüfen eines Steuergeräts (110) für mindestens ein PTC-Heizelement (130A, 130X) oder eines PTC-Heizers (100) für ein Fahrzeug. Das Verfahren weist einen Schritt des Anlegens eines Prüfmodussignals mit einem charakteristischen Signalverlauf, der sich von einem Signalverlauf eines Ansteuersignals in einem Normalbetriebsmodus des Steuergeräts (110) unterscheidet, an einen Ansteuereingang (111) des Steuergeräts (110) und eines Testsignals mit einem vorgebbaren Signalverlauf an einen Prüfmoduseingang (113) des Steuergeräts (110) auf, um das Steuergerät (110) in einen Prüfmodus zu versetzen und um in dem Prüfmodus ansprechend auf das Testsignal eine Testsequenz an eine Schnittstelle zu dem mindestens einen PTC-Heizelement (130A, 130X) auszugeben. Das Verfahren weist ferner einen Schritt des Vergleichens einer Sensorinformation, die von einer Schnittstelle zu einer dem mindestens einen PTC-Heizelement (130A, 130X) zugeordneten Sensoreinrichtung ansprechend auf die Testsequenz empfangen wird, mit einer vorgebbaren Referenzinformation auf. Das Verfahren weist auch einen Schritt des Feststellens einer fehlerfreien Funktion des Steuergeräts (110) oder des PTC-Heizers (100) auf, wenn die Sensorinformation innerhalb eines Toleranzbereichs mit der Referenzinformation übereinstimmt, um das Steuergerät (110) oder den PTC-Heizer (100) zu prüfen.

FIG 1

**EP 2 560 458 A1**

**Beschreibung**

Die vorliegende Erfindung bezieht sich auf ein Verfahren zum Prüfen eines Steuergeräts für mindestens ein PTC-Heizelement oder eines PTC-Heizers für ein Fahrzeug und auf ein Steuergerät für mindestens ein PTC-Heizelement eines PTC-Heizers für ein Fahrzeug.

Um eine Steuereinheit bzw. ein Steuergerät eines PTC-Heizers für ein Fahrzeug am Ende der Produktion bzw. am Bandende der Fertigung zu prüfen, wird ein Prüfmodus verwendet, der es ermöglicht, dass der Regler bzw. das Steuergerät andere Funktionsweisen bzw. Funktionalitäten durchläuft als in einem Normalbetriebsmodus im Fahrzeug. Insbesondere kann in dem Prüfmodus das Steuergerät funktionell uneingeschränkt arbeiten, wobei der Normalmodus z. B. durch unterschiedliche Schutzfunktionen eingeschränkt ist. Bisher arbeiten bestehende Produkte häufig beispielsweise in einer Busversion mit einem Prüfmodus, wobei ein Busprotokoll verwendet werden kann, das für diesen Modus reservierte Rahmen bzw. Frames enthält.

Es ist die Aufgabe der vorliegenden Erfindung, ein verbessertes Verfahren zum Prüfen eines Steuergeräts für mindestens ein PTC-Heizelement oder eines PTC-Heizers für ein Fahrzeug und ein verbessertes Steuergerät für mindestens ein PTC-Heizelement eines PTC-Heizers für ein Fahrzeug zu schaffen.

Diese Aufgabe wird durch ein Verfahren sowie ein Steuergerät gemäß den Hauptansprüchen gelöst.

Die vorliegende Erfindung schafft ein Verfahren zum Prüfen eines Steuergeräts für mindestens ein PTC-Heizelement oder eines PTC-Heizers für ein Fahrzeug, dadurch gekennzeichnet, dass das Verfahren folgende Schritte aufweist:

Anlegen eines Prüfmodussignals mit einem charakteristischen Signalverlauf, der sich von einem Signalverlauf eines Ansteuersignals in einem Normalbetriebsmodus des Steuergeräts unterscheidet, an einen Ansteuereingang des Steuergeräts und eines Testsignals mit einem vorgebbaren Signalverlauf an einen Prüfmoduseingang des Steuergeräts, um das Steuergerät in einen Prüfmodus zu versetzen und um in dem Prüfmodus ansprechend auf das Testsignal eine Testsequenz an eine Schnittstelle zu dem mindestens einen PTC-Heizelement auszugeben;
Vergleichen einer Sensorinformation, die von einer Schnittstelle zu einer dem mindestens einen PTC-Heizelement zugeordneten Sensoreinrichtung ansprechend auf die Testsequenz empfangen wird, mit einer vorgebbaren Referenzinformation; und
Feststellen einer fehlerfreien Funktion des Steuergeräts oder des PTC-Heizers, wenn die Sensorinformation innerhalb eines Toleranzbereichs mit der Referenzinformation übereinstimmt, um das Steuergerät oder den PTC-Heizer zu prüfen.

Bei dem Fahrzeug kann es sich um ein Kraftfahrzeug handeln, insbesondere ein straßengebundenes Kraftfahrzeug, beispielsweise einen Personenkraftwagen, Lastkraftwagen, ein Fahrzeug zum Personentransport oder ein sonstiges Nutzfahrzeug. Unter PTC wird ein positiver Temperaturkoeffizient (PCT = engl.: Positive Temperature Coefficient) verstanden. Ein PTC-Heizer kann beispielsweise das zumindest eine PTC-Heizelement und das Steuergerät aufweisen. Das Steuergerät kann ausgebildet sein, um einen Betrieb des PTC-Heizelements zu steuern. Bei dem PTC-Heizelement kann es sich somit um ein Heizelement aus einem Material mit positivem Temperaturkoeffizienten bzw. einem Kaltleiter handeln, beispielsweise einen PTC-Widerstand, PTC-Thermistor oder dergleichen. Das Prüfmodussignal weist einen charakteristischen Signalverlauf auf, der sich von Signalverläufen in einem Normalbetriebsmodus des Steuergeräts bzw. des PTC-Heizers unterscheidet. Ein Signalverlauf eines Signals kann im vorliegenden Zusammenhang bewirken, dass an einem Eingang, an dem das Signal anliegt, in Abhängigkeit von dem Signalverlauf eine elektrische Spannung bzw. ein elektrischer Strom mit einem bestimm ten Betrag, einer bestimmten Frequenz oder dergleichen anliegt. Das Prüfmodussignal kann auch eine charakteristische Frequenz oder Anlegungszeitdauer bzw. charakteristische Zeitdauer eines bestimmten Zustandes des Prüfmodussignals aufweisen, wobei sich die Frequenz oder Anlegungszeitdauer bzw. Zeitdauer von in einem Normalbetriebsmodus des Steuergeräts vorkommenden Zeitdauern unterscheiden kann. Das Testsignal kann durch das Steuergerät erzeugt, aus einer internen oder externen Speichereinrichtung ausgelesen oder von extern empfangen werden. Das Testsignal kann einen vorgebbaren bzw. definierbaren Signalverlauf aufweisen. Das Testsignal ist ausgebildet, um die Durchführung oder das Anlegen einer Testsequenz an das mindestens eine PTC-Heizelement zu ermöglichen. Durch das Anlegen der Testsequenz kann das mindestens eine PTC-Heizelement hinsichtlich einer Reaktion auf das Testsignal geprüft werden. Auch kann bei der Testsequenz eine ordnungsgemäße Durchführung der Testsequenz durch das Steuergerät geprüft werden. Das Prüfmodussignal und das Testsignal können bei gleichzeitiger Anlegung an die Eingänge des Steuergeräts ausgebildet sein, um einen Eintritt des Steuergeräts in den Prüfmodus zu bewirken. Dabei kann das Steuergerät basierend auf einer Anlegung des Prüfmodussignals sowie des Testsignals in den Prüfmodus wechseln bzw. umschalten. Der Prüfmodus kann auch als Diagnosemodus, Testmodus, Servicemodus oder dergleichen bezeichnet werden. Wenn sich das Steuergerät in dem Prüfmodus befindet, kann sich eine Ansteuerung des mindestens einen PTC-Heizelements von einer Ansteuerung in einem Normalbetriebsmodus des Steuergeräts unterscheiden. Die Sensorinformation kann beispielsweise einen elektrischen Strom bzw. eine elektrische Stromstärke durch das mindestens eine PTC-Heizelement, eine elektrische Spannung über das mindestens eine PTC-Heizelement, eine Temperatur des mindestens einen PTC-Heizelements und/oder dergleichen repräsentieren. Bei der Sensoreinrichtung kann es sich beispielsweise um einen Stromsensor, Spannungssensor, Temperatursensor und/oder dergleichen handeln. Die Sensorinformation kann eine Reaktion auf die Testsequenz bzw. das Testsignal repräsentieren. Bei der Referenzinformation kann es sich um eine Vergleichsinformation, Vorgabeinformation oder dergleichen handeln. Das Steuergerät kann beispielsweise ausgebildet sein, um die Referenzinformation aus einer internen oder externen Speichereinrichtung auszulesen. Stimmen die Sensorinformation und die Referenzinformation innerhalb des Toleranzbereichs überein, entspricht somit eine tatsächliche Reaktion des mindestens einen PTC-Heizelements auf das Testsignal einer vordefinierten Reaktion. Der Toleranzbereich kann eine Messtoleranz, Materialtoleranz und/oder dergleichen umfassen. Der Toleranzbereich kann beispielsweise 1 Prozent, 2 Prozent, 3 Prozent, 5 Prozent oder 1 Q Prozent eines durch die Referenzinformation repräsentierten Wertes betragen. Der Prüfmodus und/oder die Testsequenz können anschließend an eine Fertigung des Steuergeräts oder des PTC-Heizers oder nach einem Einbau des PTC-Heizers in das Fahrzeug ausgeführt werden.

Die vorliegende Erfindung schafft ferner ein Steuergerät für mindestens ein PTC-Heizelement eines PTC-Heizers für ein Fahrzeug, dadurch gekennzeichnet, dass das Steuergerät ausgebildet ist, um:

-ansprechend auf ein an einen Ansteuereingang des Steuergeräts angelegtes Prüfmodussignal mit einem charakteristischen Signalverlauf, der sich von einem Signalverlauf eines Ansteuersignals in einem Normalbetriebsmodus des Steuergeräts unterscheidet, und ein an einen Prüfmoduseingang des Steuergeräts angelegtes Testsignal mit einem vorgebbaren Signalverlauf in einen Prüfmodus einzutreten;
in dem Prüfmodus ansprechend auf das Testsignal eine Testsequenz an eine Schnittstelle zu dem mindestens einen PTC-Heizelement auszugeben;
eine Sensorinformation, die von einer Schnittstelle zu einer dem mindestens einen PTC-Heizelement zugeordneten Sensoreinrichtung ansprechend auf das Testsignal empfangen wird, mit einer vorgebbaren Referenzinformation zu vergleichen; und
eine fehlerfreie Funktion des Steuergeräts oder des PTC-Heizers festzustellen, wenn die Sensorinformation innerhalb eines Toleranzbereichs mit der Referenzinformation übereinstimmt.

Ein solches Steuergerät kann in Verbindung mit dem oben genannten Verfahren vorteilhaft geprüft werden. Somit kann das oben genannte Verfahren in Verbindung mit dem Steuergerät vorteilhaft ausgeführt werden.

Der vorliegenden Erfindung liegt die Erkenntnis zugrunde, dass zum Versetzen eines PTC-Reglers bzw. eines Steuergeräts für mindestens ein PTC-Heizelement in einen Prüfmodus, zwei Signale mit spezifischen Signalverläufen an zwei Eingänge des Steuergeräts angelegt werden können, insbesondere auch während einer bestimmten Zeitdauer- Um das Steuergerät in dem Prüfmodus zu betreiben, kann ein Testsignal mit spezifischem Signalverlauf angelegt werden. Um einen PTC-Regler bzw. ein Steuergerät für mindestens ein PTC-Heizelement in einen Prüfmodus zu versetzen, kann beispielsweise ein spezifischer Spannungspegel an zwei unterschiedliche Eingänge, Prüfmoduseingang und Normalansteuereingang, während einer definierten Zeitdauer angelegt werden. Damit das Steuergerät ordnungsgemäß in dem Prüfmodus arbeiten kann, sind somit insbesondere definierte Spannungspegel anzulegen.

Vorteilhafterweise kann sichergestellt werden, dass ein PTC-Regler bzw. Steuergerät für mindestens ein PTC-Heizelement nicht versehentlich in einen Prüfmodus wechselt, da für den Eintritt in den Prüfmodus die Anlegung zweier Signale an zwei Eingänge erforderlich ist. Charakteristiken der Signale unterscheiden sich für das Steuergerät erkennbar von Signalcharakteristiken während eines Normalbetriebsmodus. Somit kann eine Funktion des Steuergeräts bzw. des PTC-Heizers beispielsweise auch in einem eingebauten Zustand in einem Fahrzeug zuverlässiger und sicherer gemacht werden. Der Prüfmodus des PTC-Reglers bzw. Steuergerätes kann somit auf verwechslungssichere Weise angewählt werden. Aufgrund einer Implementierung beispielsweise durch Firmware können die Bedingungen bzw. Charakteristiken des Prüfmodussignals und/oder des Testsignals ohne weiteres modifiziert werden, was eine Flexibilität der Prüfung erhöht, wenn sich Betriebsspezifikationen ändern. Da für den Prüfmodus keine Bus-Kommunikation erforderlich ist, kann das Konzept auch auf einfache Steuergeräte bzw. PTC-Heizer angewandt werden. Vorteilhaft ist ferner auch eine Flexibilität von Signalparametern, wobei vordefinierte Parameter auch aus einer dem Steuergerät zugeordneten Speichereinrichtung abgerufen werden können.

Insbesondere kann im Schritt des Anlegens als das Prüfmodussignal ein Pulsweifienmoduiationssignal mit einem vorgebbaren, während der Anlegungszeitdauer gleichbleibenden Tastgrad an den Ansteuereingang angelegt werden. Unter einem Tastgrad kann ein Verhältnis einer Zeitdauer verstanden werden, in der ein Signal einen Hoch-Pegel in Bezug auf eine Zyklusdauer des Signals einnimmt. Der Tastgrad kann ausgebildet sein, um durch das Steuergerät als eine weitere Bedingung zum Eintritt in den Prüfmodus erkannt zu werden. Somit kann der Tastgrad ein charakteristischer Tastgrad sein, der für das Prüfmodussignal spezifisch sein kann. Eine solche Ausführungsform bietet den Vorteil, dass es somit möglich ist, durch das Anlegen des Prüfmodussignals in Gestalt eines Pulsweitenmodulationssignals mit einem spezifischen Tastgrad eine Verwechslungsgefahr mit einem dem Normalbetriebsmodus zugeordneten Signal zu reduzieren.

Hierbei kann im Schritt des Anlegens als das Prüfmodussignal während einer Anlegungszeitdauer ein Massepotential an den Ansteuereingang angelegt werden. Somit kann der charakteristische Signalverlauf des Prüfmodussignals bewirken, dass an dem Ansteuereingang ein Massepotenzial anliegt. Eine solche Ausführungsform bietet den Vorteil, dass eine Verwechslungsgefahr mit einem dem Normalbetriebsmodus zugeordneten Signal ebenfalls vermieden werden kann.

Auch kann im Schritt des Anlegens als das Testsignal ein Pulsweitenmodulationssignal mit einem veränderbaren Tastgrad während einer Anlegungszeitdauer an den Prüfmoduseingang angelegt werden. Während der Anlegungszeitdauer des Testsignals kann der Tastgrad des Testsignals in einem ersten Zeitabschnitt zunächst konstant bleiben und kann in einem zweiten Zeitabschnitt dann veränderbar sein. Bei unterschiedlichen Tastgraden des Testsignals können unterschiedliche Werte der Sensorinformation erhalten werden. Eine solche Ausführungsform bietet den Vorteil, dass mittels eines solchen Testsignals eine Testsequenz bzw. Testprozedur an einem PTC-Heizelement auf einfache und effiziente Weise durchgeführt werden kann. Die Testsequenz kann somit mittels des veränderbaren Tastgrades des Testsignals unaufwändig realisiert werden.

Ferner kann ein Schritt des Veränderns eines Tastgrades des Testsignals nach einem vorgebbaren Schema während einer Durchführung der Testsequenz vorgesehen sein. Dabei kann das vorgebbare Schema eine Veränderung des Tastgrades in Stufen mit einer vorgebbaren Stufenhöhe und Stufenbreite aufweisen. Die Stufenhöhe bezeichnet beispielsweise eine prozentuale Änderung des Tastgrades. Die Stufenbreite bezeichnet beispielsweise eine Zeitdauer, während der eine bestimmte Stufenhöhe des Tastgrades in dem Testsignal vorliegt. Die Veränderung des Tastgrades kann ein Einschalten und/oder Ausschalten unterschiedlicher Stufen, d. h. einzelner PTC-Heizelemente, des PTC-Heizers einzeln oder gemeinsam bewirken und kann durch das vorgebbare Schema spezifischer Tastgrad-Stufen erreicht werden. Eine solche Ausführungsform bietet den Vorteil, dass eine Prüfung des PTC-Heizers bzw. von dessen PTC-Heizelementen zuverlässig, umfassend und effizient ausgeführt werden kann.

Dabei kann im Schritt des Veränderns der Tastgrad des Testsignals in Stufen gesenkt werden. Eine höchste Stufe des Tastgrades kann beispielsweise einen Eintritt in den Prüfmodus repräsentieren und bewirken. Eine erste Senkung des Tastgrades kann beispielsweise ein Einschalten aller PTC-Heizelemente des PTC-Heizers repräsentieren und bewirken. Beispielsweise kann jede weitere Senkung des Tastgrades um eine Stufe bewirken, dass ein weiteres PTC-Heizelement des PTC-Heizers dann abgeschaltet wird. Eine solche Ausführungsform bietet den Vorteil, dass auf diese Weise eine Prüfung des PTC-Heizers bzw. von dessen PTC-Heizelementen ein besonders aussagekräftiges Ergebnis liefern kann, an dem ein Verhalten einzelner PTC-Heizelemente besonders gut abgelesen werden kann.

Insbesondere kann im Schritt des Veränderns der Tastgrad des Testsignals in Stufen gesenkt werden, bis eine aufgrund des Testsignals an dem Prüfmoduseingang anliegende Spannung null beträgt. Eine solche vollständige Senkung des Tastgrades kann beispielsweise einen Austritt aus dem Prüfnadus repräsentieren und bewirken. Eine solche Ausführungsform bietet den Vorteil, dass somit die Testsequenz schrittweise von einer Vollbelastung des PTC-Heizers bzw. von dessen PTC-Heizelementen ausgehend durchgeführt werden kann, was eine Aussagekraft der Prüfung erhöht. Denn durch die Stufen kann die Sensorinformation besonders effizient mit der Referenzinformation verglichen werden. Ferner bewirkt die Senkung des Tastgrades bis zu einer Spannung von null an dem Prüfmoduseingang einen automatischen Austritt aus dem Prüfmodus, der somit sicher beendet werden kann.

Alternativ oder zusätzlich kann ein Austritt aus dem Prüfmodus beispielsweise in den Normalbetriebsmodus auch erfolgen, wenn eine der Bedingungen für den Eintritt nicht mehr erfüllt ist oder das Testsignal nicht ordnungsgemäß verläuft und somit das Einschalten/Ausschalten einer Stufe des PTC-Heizers, d. h. eines PTC-Heizelements, nicht ordnungsgemäß erfolgt.

Auch kann der Schritt des Veränderns des Tastgrades nach Ablauf einer Einschwingzeit ansprechend auf das Ausgeben des Testsignals durchgeführt werden. Die Einschwingzeit kann hierbei vorgegeben sein oder beispielsweise durch das Steuergerät ermittelt bzw. gemessen werden. Wenn die Einschwingzeit nach dem Beginn des Ausgebens des Testsignals abgelaufen ist, wird die Veränderung des Tastgrades des Testsignals durchgeführt. Somit kann während der Einschwingzeit der Tastgrad des Testsignals gleich bleibend sein. Eine solche Ausführungsform bietet den Vorteil, dass die Genauigkeit der Prüfung bzw. der Testsequenz erhöht wird, da Störeinflüsse verringert werden, indem abgewartet wird, bis die Einschwingzeit abgelaufen ist.

Gemäß einer Ausführungsform kann im Schritt des Feststellens die fehlerfreie Funktion des Steuergeräts oder des PTC-Heizers zusätzlich festgestellt werden, wenn eine Veränderung der Sensorinformation innerhalb einer vorgebbaren Verzögerung ansprechend auf eine Veränderung des Testsignals erfolgt. Wenn beispielsweise der Tastgrad des Testsignals zu einem ersten Zeitpunkt um eine Stufe gesenkt wurde, kann eine tatsächliche Verzögerung bis zu einem zweiten Zeitpunkt gemessen werden, bei dem eine Änderung in der Sensorinformation als Reaktion auf die Veränderung des Tastgrades auftritt. Wenn die tatsächliche Verzögerung der vorgebbaren Verzögerung innerhalb eines Toleranzbereichs entspricht, kann die fehlerfreie Funktion des Steuergeräts oder des PTC-Heizers festgestellt werden. Eine solche Ausführungsform bietet den Vorteil, dass ein Ergebnis der Prüfung bzw. der Testsequenz noch genauer und aussagekräftiger gemacht wird. Die Verzögerung stellt hierbei eine zusätzliche Kategorie der Prüfung bzw. der Testsequenz dar, was die Aussagekraft erhöht.

Vorteilhafte Ausführungsbeispiele der vorliegenden Erfindung werden nachfolgend Bezug nehmend auf die beiliegenden Zeichnungen näher erläutert. Es zeigen:

Fig. 1    eine Darstellung eines PTC-Heizers gemäß einem Ausführungsbeispiel der vorliegenden Erfindung;

Fig. 2    eine Darstellung eines Ansteuersignals in einem Normalbetriebsmodus; und

Fig. 3    eine Darstellung eines Testsignals gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

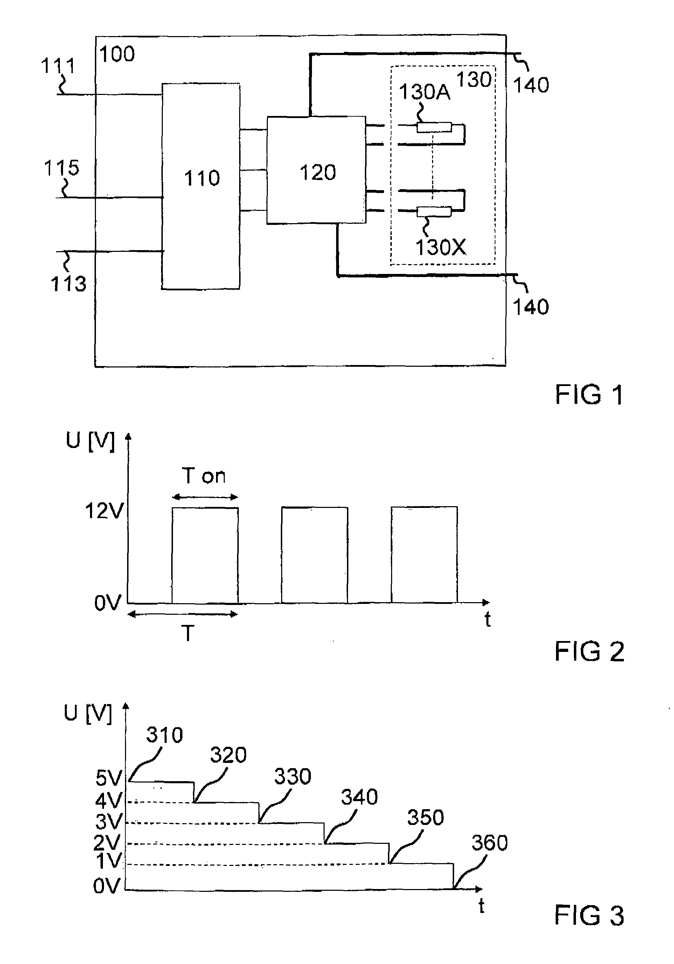

Fig. 1 zeigt eine Darstellung bzw. eine Systemübersicht eines PTC-Heizers 100 gemäß einem Ausführungsbeispiel der vorliegenden Erfindung. Der PTC-Heizer 100 weist ein Steuergerät 110 mit einem Ansteuereingang 111, einem Prüfmoduseingang 113 sowie einem weiteren Eingang 115, eine Schalteinrichtung 120, PTC-Heizelemente 130 mit einem ersten PTC-Widerstand 130A sowie einem x-ten PTC-Widerstand 130X, und eine Stromversorgungsleitung 140 auf. Der DC-Halter 100 kann dabei beispielsweise zumindest zum Teil als eine elektronische Steuereinheit (ECU; engl.: Electronic Control Unit) ausgeführt sein. Punkte zwischen dem ersten PTC-Widerstand 130A und dem x-ten PTC-Widerstand 130X repräsentierten die Möglichkeit, dass zwischen dem ersten PTC-Widerstand 130A und dem x-ten PTC-Widerstand 130X des PTC-Heizers 100 zumindest ein weiterer PTC-Widerstand angeordnet sein kann. Auch wenn es in Fig. 1 nicht explizit gezeigt ist, kann somit der PTC-Heizer 100 gemäß dem in Fig. 1 dargestellten Ausführungsbeispiel der vorliegenden Erfindung beispielsweise drei PTC-Widerstände aufweisen.

Das Steuergerät 110 ist über eine Kommunikationsschnittstelle, beispielhaft drei elektrische Leitungen bzw. Signalleitungen, mit der Schalteinrichtung 120 verbunden. Das Steuergerät 110 kann eine elektrische Schaltung beispielsweise in Gestalt einer Steuerelektronik, Steuerlogik oder dergleichen aufweisen. Bei dem Steuergerät 110 kann sich um einen so genannten Microcontroller mit beispielsweise einer 5V-Reglerfunktion und/oder einer Wächterfunktion handeln. In einem Normalbetriebsmodus ist das Steuergerät 110 ausgebildet, um einen Betrieb des PTC-Heizers 100 zu steuern- Das Steuergerät 100 weist den Ansteuereingang 111, an den in einem Normalbetriebsmodus beispielsweise ein PWM-Ansteuersignal (PWM = Pulsweitenmodulation) und zum Eintritt in den Prüfmodus ein Prüfmodussignal angelegt werden kann, den Prüfmoduseingang 113, an denen zum Eintritt in den Prüfmodussignal ein Testsignal angelegt werden kann, und den weiteren Eingang 115 auf. Das Steuergerät 110 ist ausgebildet, um ansprechend auf ein an den Ansteuereingang 111 des Steuergeräts 110 angelegtes Prüfmodussignal mit einem charakteristischen Signalverlauf, der sich von einem Signalverlauf eines Ansteuersignals in einem Normalbetriebsmodus des Steuergeräts 110 unterscheidet, und ansprechend auf ein an den Prüfmoduseingang 113 des Steuergeräts 110 angelegtes Testsignal mit einem vorgebbaren Signalverlauf in den Prüfmodus einzutreten. Ferner weist das Steuergerät 110 beispielhaft drei elektrische Leitungen auf, mittels derer das Steuergerät 110 mit der Schalteinrichtung 120 verbunden ist. Auch ist das Steuergerät 110 ausgebildet, um in dem Prüfmodus ansprechend auf das Testsignal eine Testsequenz an die Schalteinrichtung 120 und somit die PTC-Heizelemente 130 auszugeben.

Die Schalteinrichtung 120 kann gemäß dem in Fig. 1 dargestellten Ausführungsbeispiel der vorliegenden Erfindung drei Schalter umfassen, die beispielsweise in einer High-Side-Konfiguration bezüglich der PTC-Heizelemente 130 verschaltet sind, auch wenn es in Fig. 1 nicht explizit gezeigt ist. Ein einzelner der drei Schalter der Schalteinrichtung 120 kann einem einzelnen der PTT-Widerstände 130A-130X der PTC-Heizelemente 130 zugeordnet sein. Ein erster Schalter der Schalteinrichtung 120 ist in Stromversorgungsleitung 140 geschaltet, die durch den ersten PTC-Widerstand 130A verläuft und diesen mit elektrischem Strom versorgen kann. Der erste Schalter ist ausgebildet, um das Testsignal von dem Steuergerät 110 in dem Prüfmodus zu empfangen. Der erste Schalter ist ausgebildet, um basierend auf dem Testsignal einen Fluss von elektrischem Strom über die Stromversorgungsleitung 140 zu dem ersten PTC-Widerstand 130A zu ermöglichen oder zu unterbrechen. Der erste PTC-Widerstand 130A kann als ein Heizelement dienen. In Abhängigkeit von dem Testsignal kann sich der erste PTC-Widerstand 130A erwärmen und kann sich ein Widerstandswert des ersten PTC-Widerstands 130A verändern.Ein x-ter Schalter 120X ist in die Stromversorgungsleitung 140 geschaltet, die auch durch den x-ten PTC-Widerstand 130X verläuft und diesen mit elektrischem Strom versorgen kann. Der x-te Schalter ist ausgebildet, um das Testsignal von dem Steuergerät 110 in dem Prüfmodus zu empfangen. Der x-te Schalter ist ausgebildet, um basierend auf dem Testsignal einen Fluss von elektrischem Strom über die x-te Versorgungsleitung zu dem x-ten PTC-Widerstand 130X zu ermöglichen oder zu unterbrechen. Der x-te PTC-Widerstand 130X kann als ein Heizelement dienen. in Abhängigkeit von dem Testsignal kann sich der x-te PTC-Widerstand 130X erwärmen und kann sich ein Widerstandswert des x-ten PTC-Widerstands 130X verändern. Bei den PTC-Heizelementen 130 kann es sich um PTC-Heizerausgangsstufen handeln.

Auch wenn es in Fig. 1 nicht gezeigt ist, kann das Steuergerät 110 über eine weitere Kommunikationsschnittstelle, beispielsweise zumindest eine weitere elektrische Leitung bzw. Signalleitung, mit Sensoreinrichtungen und/oder einem Speicher verbunden sein. Die Sensoreinrichtungen können beispielsweise Stromsensoren sein. Es kann jeweils eine Sensoreinrichtung einem PTC-Widerstand der PTC-Heizelemente 130 zugeordnet sein. Die Sensoreinrichtungen können in die Stromversorgungsleitung 140 geschaltet sein, die durch die PTC-Heizelemente 130 verläuft. Die Sensoreinrichtungen können ausgebildet sein, um abhängig von einem erfassten Strom in der Stromversorgungsleitung Sensorinformationen an das Steuergerät 110 auszugeben. Der Speicher kann außerhalb des PTC-Heizers 100 angeordnet sein oder Teil des Steuergeräts 110 sein. In dem Speicher kann beispielsweise eine Referenzinformation bzw. ein Satz von Referenzinformationen für eine Testsequenz gespeichert sein. Das Steuergerät 110 kann ausgebildet sein, um die Referenzinformationen aus dem Speicher auszulesen. Das Steuergerät 110 ist ferner ausgebildet, um Sensorinformationen, die von einer Schnittstelle zu der den PTC-Heizelementen 130 zugeordneten Sensoreinrichtung ansprechend auf das Testsignal empfangen werden, mit den Referenzinformationen zu vergleichen. Das Steuergerät 110 ist auch ausgebildet, um eine fehlerfreie Funktion des Steuergeräts 110 oder des PTC-Heizers 100 festzustellen, wenn die Sensorinformationen innerhalb eines Toleranzbereichs mit den Referenzinformationen übereinstimmen.

Fig. 2 zeigt eine Darstellung eines Ansteuersignals in einem Normalbetriebsmodus. Das Ansteuersignal kann an einem Ansteuereingang eines Steuergeräts eines PTC-Heizers, wie beispielsweise dem Ansteuereingang des Steuergeräts des PTC-Heizers aus Fig. 1, in einem Normalbetriebsmodus bzw. Normalmodus anliegen. Bei dem Ansteuersignal handelt es sich gemäß Fig. 2 um ein PWM-Treibersignal, das somit an einem PWM-Eingang anliegt. In Fig. 2 ist ein Signaldiagramm des Ansteuersignals dargestellt, wobei an der Abszissenachse die Zeit aufgetragen ist und an der Ordinatenachse eine Spannung U in Volt (V) des Ansteuersignals aufgetragen ist. Das Ansteuersignal weist eine periodische Folge von Impulsen auf, wobei sich durch das Verhältnis einer Periodendauer T zu einer Impulsdauer T on ein spezifischer Tastgrad ergibt. Insbesondere weist das Ansteuersignal einen Verlauf eines Rechtecksignals auf, mit einem Sprung von OV auf 12V und zurück auf OV während ihres Impulses. Der Tastgrad ergibt sich wie folgt:

$$\text{Tastgrad} = \frac{T \; on}{T} \; x \; 100 \; (0 \; bis \; 100\%).$$

Pulsweitenmodulationssignale, wie das vorliegende Ansteuersignal, sind Fachleute auf dem Gebiet hinreichend bekannt und bedürfen an dieser Stelle keiner weiteren Erläuterung.

Fig. 3 zeigt eine Darstellung eines Testsignals gemäß einem Ausführungsbeispiel der vorliegenden Erfindung. Das Testsignal kann an einen Prüfmoduseingang eines Steuergeräts eines PTC-Heizers, wie beispielsweise den Prüfmoduseingang des Steuergeräts des PTC-Heizers aus Fig. 1, nach dem Verfahren gemäß Ausführungsbeispielen der vorliegenden Erfindung angelegt werden. Bei dem Testsignal handelt es sich gemäß Fig. 3 um ein Treibersignal, das an den Prüfmoduseingang in einem Prüfmodus angelegt werden kann. Um in den Prüfmodus einzutreten, wird zusätzlich zu der Anlegung des Testsignals an den Prüfmoduseingang ein Prüfmodussignal an einen Ansteuereingang des Steuergeräts angelegt, insbesondere wobei Ansteuereingang dabei auf Masse gelegt sein kann. In dem Prüfmodus ist beispielsweise eine Strombegrenzung nicht aktiviert. In Fig. 3 ist ein Signaldiagramm des Testsignals dargestellt, wobei an der Abszissenachse die Zeit aufgetragen ist und an der Ordinatenachse eine Spannung U in Volt (V) des Testsignals aufgetragen ist. Genau gesagt ist ein Signalverlauf des Testsignals gezeigt, wobei der Signalverlauf stufenförmig von einer Spannung von 5V auf eine Spannung von OV absinkt. Der stufenförmige Signalverlauf ermöglicht in dem Prüfmodus eine Ansteuerung der beispielhaft drei PTC-Widerstände aus Fig. 1 unabhängig und Widerstand für Widerstand.

Eine erste Stufe 314 in dem Signalverlauf weist einen konstanten Pegel bei einer Spannung von 5V auf und repräsentiert einen Eintritt in den Prüfmodus. Bei einem Übergang von der ersten Stufe 310 zu einer zweiten Stufe 320 sinkt der Signalverlauf stufenförmig ab. Die zweite Stufe 320 weist einen konstanten Pegel bei einer Spannung von 4V auf und repräsentiert ein Einschalten aller PTC-Widerstände. Bei einem Übergang von der zweiten Stufe 320 zu einer dritten Stufe 330 sinkt der Signalverlauf wiederum stufenförmig ab. Die dritte Stufe 330 weist einen konstanten Pegel bei einer Spannung von 3V auf und repräsentiert einen Zustand, in dem ein PTC-Widerstand ausgeschaltet ist und zwei PTC-Widerstände eingeschaltet sind. Bei einem Übergang von der dritten Stufe 330 zu einer vierten Stufe 340 sinkt der Signalverlauf abermals stufenförmig ab. Die vierte Stufe 340 weist einen konstanten Pegel bei einer Spannung von 2V auf und repräsentiert einen Zustand, in dem zwei PTC-Widerstände ausgeschaltet sind und ein PTC-Widerstand eingeschaltet ist. Bei einem Übergang von der vierten Stufe 340 zu einer fünften Stufe 350 sinkt der Signalverlauf wieder stufenförmig ab. Die fünfte Stufe 350 weist einen konstanten Pegel bei einer Spannung von 1 V auf und repräsentiert ein Ausschalten aller PTC-Widerstände. Beispielhaft weisen die Stufen 310 bis 350 in Fig. 3 eine identische Zeitdauer bzw. Stufenbreite auf. Bei einem Übergang von der fünften Stufe 350 zu der sechsten Stufe 360 sinkt der Signalverlauf nochmals stufenförmig ab. Die sechste Stufe 360 weist einen konstanten Pegel bei einer Spannung von OV auf und repräsentiert einen Austritt aus dem Prüfmodus.

Gemäß einem weiteren Ausführungsbeispiel der vorliegenden Erfindung kann ein ähnlicher Algorithmus zur Prüfung des Steuergeräts oder des PTC-Heizers erreicht werden. Um den Eintritt in den Prüfmodus beispielsweise am Fertigungsende sicherzustellen, kann mittels eines zufälligen Frequenzwertes, der in dem von der Hardware her zulässigen Frequenzbereich liegt, und einer zufälligen Zeitdauer ein Schlüsselcode generiert werden, der bei jedem Los der Elektronik bzw. des Steuergeräts aktualisiert werden kann. Gemäß noch einem weiteren Ausführungsbeispiel der vorliegenden Erfindung kann ein ähnlicher Algorithmus zur Prüfung des Steuergeräts oder des PTC-Heizers unter Verwendung einer Arbeitsfrequenz erreicht werden, die sich von der im Normalmodus verwendeten unterscheidet.

Unter Bezugnahme auf Fig. 1 und Fig. 3 wird ein Ausführungsbeispiel der vorliegenden Erfindung zusammenfassend nochmals erläutert. Um einen Eintritt 310 in den Prüfmodus des Steuergeräts 100 bzw. PTC-Reglers zu bewirken, wird ein spezifischer Spannungspegel an den Prüfmoduseingang 113 während einer definierten Zeitdauer angelegt und wird der Ansteuereingang 111 bzw. PWM-Eingang auf Masse gelegt, um einen versehentlichen Eintritt in diesen Modus zu vermeiden. Das Einschalten/Ausschalten 320, 330, 340, 350 der unterschiedlichen PTC-Stufen 130 geschieht durch Anlegen definierter Spannungspegel an den Prüfmoduseingang 113. Der Austritt 360 aus dem Prüfmodus bzw. die Rückkehr in den Normalmodus geschieht beispielsweise durch Anlegen einer definierten Spannung an den Prüfmoduseingang 113.

Die beschriebenen Ausführungsbeispiele sind nur beispielhaft gewählt und können miteinander kombiniert werden.

**Bezugszeichenliste**

| 100 | PTC-Heizer |
| 110 | Steuergerät |
| 111 | Ansteuereingang |
| 113 | Prüfmoduseingang |
| 115 | weiterer Eingang |
| 120 | Schalteinrichtung |
| 130 | PTC-Heizelemente |
| 130A | erster PTC-Widerstand |
| 130X | x-ter PTC-Widerstand |
| 140 | Stromversorgungsleitung |
| t | Zeit |
| T | Periodendauer |
| Ton | Impulsdauer |
| U [V] | Spannung in Volt |
| 310 | Eintritt in Prüfmodus |
| 320 | alle Stufen EIN (100%) |
| 330 | eine Stufe AUS - zwei Stufen EIN (100 %) |
| 340 | zwei Stufen AUS - eine Stufe EIN (100 %) |

350    alle Stufen AUS

360    Austritt aus Prüfmodus

**Patentansprüche**

1. Verfahren zum Prüfen eines Steuergeräts (110) für mindestens ein PTC-Heizelement (130A, 130X) oder eines PTC-Heizers (100) für ein Fahrzeug, **dadurch gekennzeichnet, dass** das Verfahren folgende Schritte aufweist:

   - Anlegen eines Prüfmodussignals mit einem charakteristischen Signalverlauf, der sich von einem Signalverlauf eines Ansteuersignals in einem Normalbetriebsmodus des Steuergeräts (110) unterscheidet, an einen Ansteuereingang (111) des Steuergeräts (110) und eines Testsignals mit einem vorgebbaren Signalverlauf an einen Prüfmoduseingang (113) des Steuergeräts (110), um das Steuergerät (110) in einen Prüfmodus zu versetzen und um in dem Prüfmodus ansprechend auf das Testsignal eine Testsequenz an eine Schnittstelle zu dem mindestens einen PTC-Heizelement (130A, 130X) auszugeben;
   - Vergleichen einer Sensorinformation, die von einer Schnittstelle zu einer dem mindestens einen PTC-Heizelement (130A, 130X) zugeordneten Sensoreinrichtung ansprechend auf die Testsequenz empfangen wird, mit einer vorgebbaren Referenzinformation; und
   - Feststellen einer fehlerfreien Funktion des Steuergeräts (110) oder des PTC-Heizers (100), wenn die Sensorinformation innerhalb eines Toleranzbereichs mit der Referenzinformation übereinstimmt, um das Steuergerät (110) oder den PTC-Heizer (100) zu prüfen.

2. Verfahren gemäß Anspruch 1, **dadurch gekennzeichnet, dass** im Schritt des Anlegens als das Prüfmodussignal ein Pulsweitenmodulationssignal mit einem vorgebbaren, während einer Anlegungszeitdauer gleichbleibenden Tastgrad an den Ansteuereingang (111) angelegt wird.

3. Verfahren gemäß einem der vorangegangenen Ansprüche, **dadurch gekennzeichnet, dass** im Schritt des Anlegens als das Prüfmodussignal während einer Anlegungszeitdauer ein Massepotential an den Ansteuereingang (111) angelegt wird.

4. Verfahren gemäß einem der vorangegangenen Ansprüche, **dadurch gekennzeichnet, dass** im Schritt des Anlegens als das Testsignal ein Pulsweitenmodulationssignal mit einem veränderbaren Tastgrad während einer Anlegungszeitdauer an den Prüfmoduseingang (113) angelegt wird.

5. Verfahren einem der vorangegangenen Ansprüche, **gekennzeichnet durch** einen Schritt des Veränderns eines Tastgrades des Testsignals nach einem vorgebbaren Schema während einer Durchführung der Testsequenz, wobei das vorgebbare Schema eine Veränderung des Tastgrades in Stufen mit einer vorgebbaren Stufenhöhe und/oder Stufenbreite aufweist.

6. Verfahren gemäß Anspruch 5, **dadurch gekennzeichnet, dass** im Schritt des Veränderns der Tastgrad des Testsignals in Stufen gesenkt wird.

7. Verfahren gemäß Anspruch 5 oder 6, **dadurch gekennzeichnet, dass** im Schritt des Veränderns der Tastgrad des Testsignals in Stufen gesenkt wird, bis eine aufgrund des Testsignals an dem Prüfmoduseingang (113) anliegende Spannung null beträgt.

8. Verfahren gemäß einem der Ansprüche 5 bis 7, **dadurch gekennzeichnet, dass** der Schritt des Veränderns des Tastgrades nach Ablauf einer Einschwingzeit ansprechend auf das Anlegen des Testsignals durchgeführt wird.

9. Verfahren gemäß einem der vorangegangenen Ansprüche, **dadurch gekennzeichnet, dass** im Schritt des Feststellens die fehlerfreie Funktion des Steuergeräts (110) oder des PTC-Heizers (100) zusätzlich festgestellt wird, wenn eine Veränderung der Sensorinformation innerhalb einer vorgebbaren Verzögerung ansprechend auf eine Veränderung des Testsignals erfolgt.

10. Steuergerät (110) für mindestens ein PTC-Heizelement (130A, 130X) eines PTC-Heizers (100) für ein Fahrzeug, **dadurch gekennzeichnet, dass** das Steuergerät (110) ausgebildet ist, um:

- ansprechend auf ein an einen Ansteuereingang (111) des Steuergeräts (110) angelegtes Prüfmodussignal mit einem charakteristischen Signalverlauf, der sich von einem Signalverlauf eines Ansteuersignals in einem Normalbetriebsmodus des Steuergeräts (110) unterscheidet, und ein an einen Prüfmoduseingang (113) des Steuergeräts (110) angelegtes Testsignal mit einem vorgebbaren Signalverlauf in einen Prüfmodus einzutreten;
- in dem Prüfmodus ansprechend auf das Testsignal eine Testsequenz an eine Schnittstelle zu dem mindestens einen PTC-Heizelement (130A, 130X) auszugeben;
- eine Sensorinformation, die von einer Schnittstelle zu einer dem mindestens einen PTC-Heizelement (130A, 130X) zugeordneten Sensoreinrichtung ansprechend auf das Testsignal empfangen wird, mit einer vorgebbaren Referenzinformation zu vergleichen; und
- eine fehlerfreie Funktion des Steuergeräts (110) oder des PTC-Heizers (100) festzustellen, wenn die Sensorinformation innerhalb eines Toleranzbereichs mit der Referenzinformation übereinstimmt.

111

100

130A 130 140

115

110 120

113

130X

140

**FIG 1**

U [V]

T on

12V

0V

T

t

**FIG 2**

U [V]

310

320

5V

330

4V

340

3V

350

2V

360

1V

0V

t

**FIG 3**

# EP 2 560 458 A1

**Europäisches Patentamt**
**European Patent Office**
**Office européen des brevets**

## EUROPÄISCHER RECHERCHENBERICHT

**Nummer der Anmeldung**

EP 11 29 0377

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 932 698 A1 (BEHR FRANCE ROUFFACH SAS [FR]) 18. Juni 2008 (2008-06-18) <br> * Zusammenfassung * <br> * Absätze [0013] - [0015] * <br> * Anspruch 1 * <br> * Abbildung 1 * <br> ----- | 1-10 | INV. <br> H05B1/02 |
| X | EP 1 932 699 A1 (BEHR FRANCE ROUFFACH SAS [FR]) 18. Juni 2008 (2008-06-18) <br> * Zusammenfassung * <br> * Absätze [0013] - [0015] * <br> * Ansprüche 1,9 * <br> * Abbildung 1 * <br> ----- | 1-10 | |
| A | EP 1 385 073 A2 (EICHENAUER HEIZELEMENTE GMBH [DE]) 28. Januar 2004 (2004-01-28) <br> * Zusammenfassung * <br> * Absätze [0017] - [0020] * <br> * Anspruch 1 * <br> ----- | 1-10 | |
| A | EP 2 189 733 A1 (BEHR FRANCE ROUFFACH SAS [FR]; GND S A [ES]) 26. Mai 2010 (2010-05-26) <br> * Zusammenfassung * <br> * Absätze [0023] - [0031], [0041], [0042] * <br> ----- | 1-10 | **RECHERCHIERTE SACHGEBIETE (IPC)** <br><br> H05B |
| A | EP 1 630 013 A1 (CATEM GMBH & CO KG [DE]) 1. März 2006 (2006-03-01) <br> * Zusammenfassung * <br> * Absätze [0052] - [0055] * <br> * Abbildung 5 * <br> ----- | 1-10 | |

Der vorliegende Recherchenbericht wurde für alle Patentansprüche erstellt

| Recherchenort | Abschlußdatum der Recherche | Prüfer |
|---|---|---|
| München | 13. Dezember 2011 | de la Tassa Laforgue |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 11 29 0377

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-12-2011

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1932698 | A1 | 18-06-2008 | KEINE | | | |
| EP 1932699 | A1 | 18-06-2008 | KEINE | | | |
| EP 1385073 | A2 | 28-01-2004 | AT | 525686 | T | 15-10-2011 |
| | | | DE | 10234561 | A1 | 19-02-2004 |
| | | | EP | 1385073 | A2 | 28-01-2004 |
| EP 2189733 | A1 | 26-05-2010 | EP | 2189733 | A1 | 26-05-2010 |
| | | | EP | 2189734 | A2 | 26-05-2010 |
| EP 1630013 | A1 | 01-03-2006 | EP | 1630013 | A1 | 01-03-2006 |
| | | | ES | 2309428 | T3 | 16-12-2008 |

EPO FORM P0461

Für nähere Einzelheiten zu diesem Anhang : siehe Amtsblatt des Europäischen Patentamts, Nr.12/82